# EUROPÄISCHE PATENTSCHRIFT

(11) **EP 1 616 447 B1**
(45) Veröffentlichungstag und Bekanntmachung des Hinweises auf die Patenterteilung: **29.07.2009**
(21) Anmeldenummer: 04705066.1
(22) Anmeldetag: 26.01.2004
(51) Int. Cl.: H04W 74/08

(54) **VERFAHREN ZUR ÜBERTRAGUNG EINER NACHRICHT, MOBILSTATION UND BASISSTATION**
METHOD FOR TRANSMITTING A MESSAGE, MOBILE STATION AND BASE STATION
PROCEDE DE TRANSMISSION D'UN MESSAGE, STATION MOBILE ET STATION DE BASE

(30) Priorität: 24.04.2003 DE 10318649
(43) Veröffentlichungstag der Anmeldung: 18.01.2006
(73) Patentinhaber: SIEMENS AKTIENGESELLSCHAFT, 80333 München (DE)
(72) Erfinder: BIENAS, Maik, 30519 Hannover (DE); KOWALEWSKI, Frank, 38228 Salzgitter (DE); SCHWAGMANN, Norbert, 38102 Braunschweig (DE)
(86) Internationale Anmeldenummer: PCT/EP2004/000632
(87) Internationale Veröffentlichungsnummer: WO 2004/095869

(56) Entgegenhaltungen:
- WO-A-00/57663
- US-A1- 2003 026 324
- "Universal Mobile Telecommunications System (UMTS);Physical channels and mapping of transport channels onto physical channels (FDD) (3GPP TS 25.211 version 5.3.0 Release 5); ETSI TS 125 211" ETSI STANDARDS, EUROPEAN TELECOMMUNICATIONS STANDARDS INSTITUTE, SOPHIA-ANTIPO, FR, Bd. 3-R1, Nr. V530, Dezember 2002 (2002-12), XP014008349 ISSN: 0000-0001 in der Anmeldung erwähnt
- "Universal Mobile Telecommunications System (UMTS);Physical layer procedures (FDD) (3GPP TS 25.214 version 5.4.0 Release 5); ETSI TS 125 214" ETSI STANDARDS, EUROPEAN TELECOMMUNICATIONS STANDARDS INSTITUTE, SOPHIA-ANTIPO, FR, Bd. 3-R1, Nr. V540, März 2003 (2003-03), XP014008413 ISSN: 0000-0001 in der Anmeldung erwähnt

## Beschreibung

Die Erfindung betrifft ein Verfahren zur Übertragung einer Nachricht, eine Mobilstation und eine Basisstation.

Im Mobilfunk wird zwischen zwei Verbindungsrichtungen unterschieden. Die Vorwärtsrichtung (Downlink, DL) entspricht einer Übertragung von der Basisstation (Node B) zur Mobilstation (UE, User Equipment), und die Rückwärtsrichtung (Uplink, UL) entspricht einer Übertragung von der UE zur NodeB.

In einem UMTS (Universal Mobile Telecommunications System) können mehrer UEs gleichzeitig auf einer Frequenz im Uplink senden bzw. von einer Node B im Downlink bedient werden. Das wird dadurch ermöglicht, dass unterschiedliche UEs zur Übermittlung ihrer Daten unterschiedliche Spreizcodes benutzen, die orthogonal zueinander sind. Die UEs nutzen somit unterschiedliche Physikalische Kanäle. Wegen der Orthogonalität der Spreizcodes können die unterschiedlichen UEs im Uplink empfangsseitig durch die Node B unterschieden werden bzw. die übertragenen Daten getrennt werden.

Da bei der Übertragung die Signale jedoch durch den Mobilfunkkanal modifiziert werden (z.B. durch Mehrwegeausbreitung aufgrund von Reflektionen an Gebäuden oder durch den DopplerEffekt), sind die genutzten Spreizcodes beim Empfang an der Node B nicht mehr exakt orthogonal zueinander. Dadurch stören die verschiedenen UEs sich gegenseitig (sog. Interferenz), was zu Kapazitätsverlusten führt. Aus diesem Grunde ist es wichtig, dass ein UE mit einer möglichst optimalen Sendeleistung sendet. Die Sendeleistung muss einerseits groß genug sein, um an der NodeB eine ausreichend gute Empfangsqualität zu gewährleisten. Die Sendeleistung sollte aber andererseits auch möglichst gering sein, um andere UEs möglichst nicht zu stören. Daher ist die Leistungsregelung ein wichtiger Bestanteil eines UMTS.

In einem UMTS ist als Möglichkeit der Leistungsregelung eine geschlossene Regelschleife, welche im Folgenden kurz für den Uplink skizziert wird (für nähere Erläuterung siehe [1]).

Die Node B schätzt für Daten, die sie von einer UE empfängt, das Signal-zu-Interferenz-Verhältnis (SIR, Signal to Interference Ratio). Dieser Wert stellt ein Qualitätskriterium für das empfangene Signal dar. Durch Vergleich mit einem vorgegebenen Wert SIR_{target} wird ein Leistungsregelungs-Befehl (TPC-Befehl, TPC: Transmission Power Control) erzeugt und über einen DL-Kanal an das UE gesendet. Der Wert für SIR_{target} wird dabei vom Netz für jedes UE bzw. für jeden Physikalischen Kanal individuell so vorgegeben, dass für die jeweiligen Daten eine ausreichende Übertragungsqualität gewährleistet wird. Die TPC-Befehle sind reine Boolean-Informationen und stellen lediglich die Information dar, ob das gemessene SIR unter-oder oberhalb des vorgegeben Wert SIR_{target} liegt. Deshalb können die TPC-Befehle auch mit den Kommandos "UP" (SIR unterhalb SIR_{target}) und "DOWN" (SIR überhalb SIR_{target}) gleichgesetzt werden. Der Befehl "UP" bedeutet, dass die Empfangsqualität nicht ausreicht, und deshalb im UE eine Erhöhung der Sendeleistung notwendig ist, und umgekehrt für den "DOWN"-Befehl.

In einem UMTS gibt es für die Übertragung von Daten zwei Arten von Physikalischen Kanäle: Dedizierte (Dedicated) Channels und gemeinsame (Common) Channels. Bei den Dedicated Channels wird eine physikalische Ressource nur für die Übertragung von Informationen für ein bestimmtes UE reserviert. Bei den Common Channels können Informationen übertragen werden, die sich an alle UEs richten (z.B. der P-CCPCH im DL), oder aber alle UEs teilen sich eine physkalische Ressource, indem jedes UE diese nur kurzzeitig nutzen darf (z.B. der Physical Random Access Channel PRACH im UL). Im letzteren Fall muss zusätzlich zu den Daten, die auf dem Common Channel gesendet werden, noch angegeben werden, welches UE gerade sendet [2].

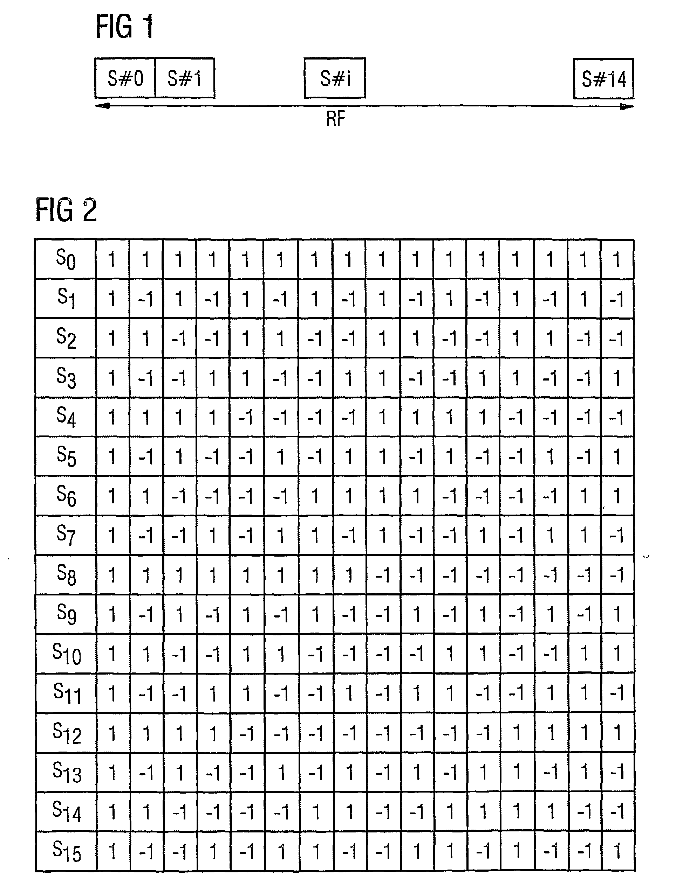

Wie in Figur 1 gezeigt, ist in einem UMTS die Zeit in Senderahmen aufgeteilt (RF, radio frames), die jeweils eine Länge von 10 Millisekunden (ms) haben. Des weiteren ist ein Senderahmen noch mal in 15 Zeitschlitze (S #0 bis S #14) aufgeteilt, die jeweils eine Länge von 10/15 = 0,667 ms haben. Ein Zeitschlitz besteht wiederum aus 2560 Chips.

Der oben schon erwähnte Physical Random Access Channel (PRACH), der nur im UL existiert, wird dazu genutzt, dass ein UE einer Node B kurzzeitig Daten senden kann, um beispielsweise einen Gesprächsaufbau anzufragen, oder um eine kurze Statusinformation mitteilen zu können. Eine solche Nachricht kann nach Stand der Technik 10 oder 20 ms lang sein, also 15 oder 30 Zeitschlitze. Die Nachricht wird mit dem ,message scrambling code', der eine Länge von 10 ms besitzt, multipliziert.

Einem PRACH sind in einer Zelle zum einen fest definierte Zugangszeitschlitze (sog. random access slots) zugeordnet, die jeweils die Länge von zwei normalen Zeitschlitzen haben. Somit ist ein Zugangszeitschlitz 1,334 ms bzw. 5120 Chips lang, wovon allerdings nur die jeweils ersten 4096 Chips physikalisch genutzt werden. Zum anderen sind einem PRACH in einer Zelle k (bis zu 16) fest definierte, zueinander orthogonale Signaturen S (auch als Zugangssequenzen oder Zugriffs-Codesequenzen bezeichnet) der Länge 16 (siehe Figur 2) zugeordnet. Diese fest definierten Zugangszeitschlitze und Signaturen werden in einer Funkzelle (Zelle) regelmäßig bekannt gegeben, so dass in der Regel jedes UE in der Zelle über diese Informationen verfügt.

Ein UE kann aus einer Signatur der Länge 16 eine Preamble (Zugriffsanfrage) der Läge 4096 wie folgt generieren: Zunächst wird die Signatur 256 mal wiederholt; das Zwischenergebnis der Länge 4096 (16*256 = 4096) wird dann mit einem ,preamble scrambling code' multipliziert, was schließlich die Preamble der Länge 4096 als Endergebnis liefert.

Schließlich ist einem PRACH noch der ,message scrambling code' zugeordnet.

Folgende Informationen werden in einer Zelle also regelmäßig bekannt gegeben, so dass jedes UE in der Zelle über diese Informationen verfügt:
- zugelassene Zugangszeitschlitze
- zugelassene Signaturen
- der ,preamble scrambling code'
- der ,message scrambling code'

Eine UE kann dann aus einer Signatur Sᵢ und dem ,preamble scrambling code' eine Preamble Pᵢ generieren (wie oben beschrieben).

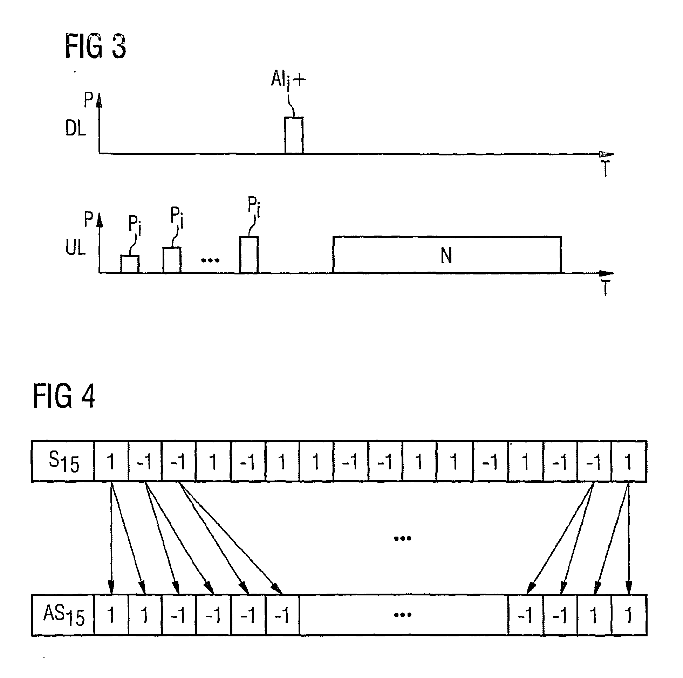

Wenn nun ein UE im UL eine kurze Nachricht versenden möchte, so führt es folgende - anhand Figur 3 erläuterte - Zugriffsprozedur aus [1].
1. Das UE wählt sich zufällig eine Signatur *Sᵢ* (Zugriffs-Codesequenz) aus und sendet die zugehörige Preamble Pᵢ (Zugriffsanfrage) im nächstmöglichen Zugangszeitschlitz mit einer zuvor berechneten Sendeleistung zur Node B.
2. Das UE hört daraufhin zu einem vorgegebenen Zeitpunkt (1,5 oder 2,5 Zugangszeitschlitze nach Beginn des Zugangszeitschlitzes, in dem die Preamble Pᵢ gesendet wurde) auf den Acquisition Indicator Channel (AICH), der von der Node B im DL gesendet wird:
   a. Empfängt das UE dort einen zugehörigen negativen Quittungsindikator (acquisition indicator) (*AIᵢ* = -1), der mit einer Quittungs-Codesequenz multilpliziert wurde, dann soll es die Zugriffsprozedur abbrechen. Das UE versucht es dann zu einem späteren Zeitpunkt mit Schritt 1 der Zugriffsprozedur noch einmal.
   b. Empfängt das UE einen zugehörigen positiven Quittungsindikator (*AIᵢ* = +1), so bedeutet das, dass das UE die eigentliche Nachricht auf der zugehörigen physikalischen Resource senden kann. Die Sendeleistung für diese Nachricht leitet die UE von der Sendeleistung der zuletzt gesendeten Zugriffs-Codesequenz ab (die sog. Leistungsregelung mit offener Regelschleife). Eine Sendeleistungsregelung mit einer geschlossenen Regelschleife findet nicht statt. Mit dem Ende des Sendens der Nachricht ist auch die gesamte Zugriffsprozedur abgeschlossen.
   c. Empfängt das UE weder einen zugehörigen positiven noch einen zugehörigen negativen Quittungsindikator *AIᵢ*, dann wählt sich das UE erneut zufällig eine Signatur *Sⱼ* aus und sendet die zugehörige Preamble Pⱼ im nächstmöglichen Zugangszeitschlitz, diesmal jedoch mit einer erhöhten Sendeleistung. Die Zugriffsprozedur geht dann weiter mit Schritt 2.

Figur 3 zeigt den zeitlichen Ablauf (T-Achse) einer erfolgreichen Zugriffsprozedur. Im Uplink (UL) sendet das UE so lange die Preamble Pᵢ zu einer zufällig ausgewählten Signatur Sᵢ mit steigender Sendeleistung (P-Achse), bis auf dem Downlink (DL) von der Node B eine Bestätigung durch einen positiven Quittungsindikator AIᵢ+ auf dem AICH gesendet wird. Daraufhin sendet das UE dann die eigentliche Nachricht (N).

Zur Signalisierung des entsprechenden positiven bzw. negativen *AIᵢ* (+1 bzw. -1) auf dem AICH generiert die Node B, nachdem sie die Preamble Pᵢ detektiert hat, zunächst aus der zugehörigen Signatur *Sᵢ* der Länge 16 eine zugehörige Antwortsignatur (Quittungs-Codesequenz) *ASᵢ* der Länge 32, indem jeder Wert zweifach hintereinander aufgeführt wird (siehe Figur 4). Diese Antwortsignatur *ASᵢ* wird noch mit dem Quittungsindikator *AIᵢ* multipliziert, so dass die Node B insgesamt die Antwortsequenz *AIᵢ*ASᵢ* - ebenfalls der Länge 32 - zu versenden hat. Vor dem Versenden wird diese Antwortsequenz *AIᵢ*ASᵢ* durch einen Spreizungscode der Länge 256 gespreizt. Die sich daraus ergebenden 8192 Werte (32*256 = 8192) werden noch I/Qmultiplext, so dass auch hier wieder die Länge von 4096 Chips erreicht wird. Auch der AICH ist in Zugangszeitschlitze (der Länge von zwei normalen Zeitschlitzen, s.o.) aufgeteilt, wovon ebenfalls jeweils nur die ersten 4096 Chips genutzt werden.

Das Senden einer solchen Antwortsequenz kann von der Node B auch zu allen nutzbaren Signaturen (es kann ja bis zu 16 verschiedene geben) gleichzeitig erfolgen (z.B. für den Fall, dass mehreren UEs gleichzeitig auf unterschiedliche Signaturen geantwortet werden muss). Das kann funktionieren, da alle 16 möglichen Antwortsignaturen und Antwortsequenzen, ebenso wie die 16 verschiedenen Signaturen bzw. deren zugehörige Preambles, orthogonal zueinander sind, und ein UE somit die für ihn bestimmte Antwortsequenz detektieren kann.

Obwohl die Leistungsregelung ein essentieller Bestanteil von UMTS ist, wird das Senden der Nachricht über den PRACH ohne Leistungsregelung in geschlossener Regelschleife durchgeführt, was zu folgenden Nachteilen führen kann. Für den Fall, dass mit einer zu hohen Leistung gesendet wird, entsteht für die übrigen UEs in der Zelle eine unnötige Interferenz. Für den Fall, dass mit einer zu niedrigen Leistung gesendet wird, kann es zu Empfangsfehlern in der NodeB kommen. Die ganze Prozedur müsste dann von der UE erneut durchgeführt werden, wodurch ebenfalls unnötige Interferenz entsteht.

In der oben beschriebenen Zugriffsprozedur kann es zudem in folgendem Fall zu nachteiligen Kollisionen zwischen zwei oder auch mehreren UEs kommen. (Mindestens) zwei UEs wählen im gleichen Zugangszeitschlitz die gleiche Signatur Sᵢ aus und senden die entsprechende Preamble Pᵢ aus. Diese mehreren (gleichen) Preambles kommen bei der NodeB als Summensignal an, die NodeB detektiert dieses als ein einziges Signal. Daraufhin sendet die NodeB einen entsprechenden positiven AIᵢ auf dem AICH. Da die UEs nichts voneinander wissen, detektiert jedes beteiligte UE diesen positiven AIᵢ als den eigenen und startet zum vordefinierten Zeitpunkt mit dem Senden seiner Nachricht. Da diese (mindestens) zwei Nachrichten im gleichen Zeitraum auf der gleichen physikalischen Ressource (also auf dem gleichen physikalischen Kanal) gesendet werden, kann die NodeB keine der (mindestens) zwei Nachrichten fehlerfrei detektieren. Somit müssen alle beteiligten UEs erneut eine Zugriffsprozedur starten, es kommt somit zu verzögerten Übermittlungszeiten und zu zusätzlichen Interferenzen im UL.

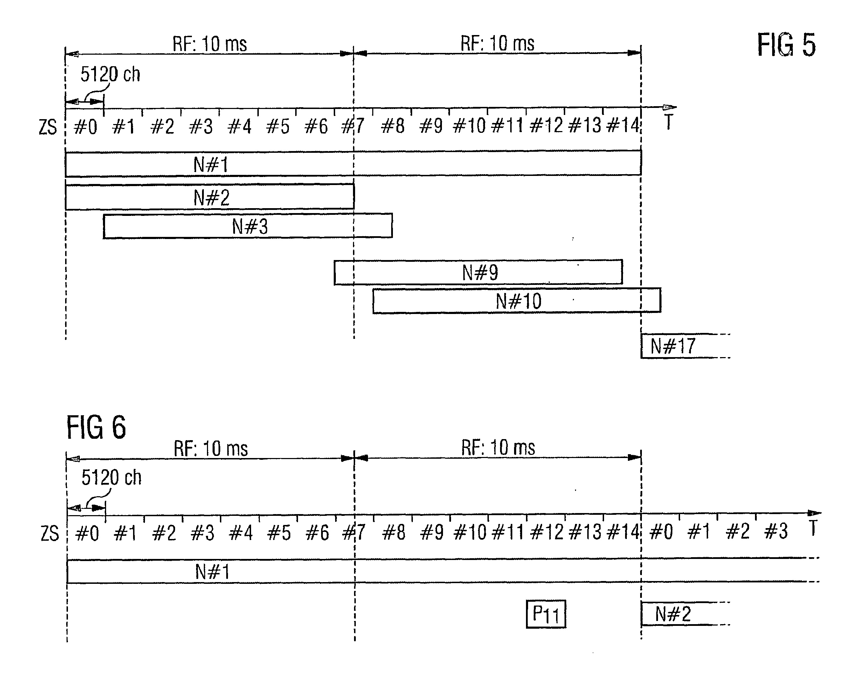

Keine Kollision tritt auf, wenn Nachrichten zeitversetzt auf der gleichen physikalischen Ressource (also auf dem gleichen physikalischen Kanal) gesendet werden. Da mit der Nachricht auch der ,message scrambling code' zeitversetzt ist, kann die NodeB die unterschiedlichen Nachrichten differenzieren und detektieren. Anhand Figur 5 wird dies noch einmal verdeutlicht. Die Nachrichten N#1 und N#2 werden im gleichen Zeitraum von unterschiedlichen UEs gesendet, es kommt zu einer Kollision. Wird jedoch neben der Nachricht N#1 noch eine zeitversetzte Nachricht N#3 oder... oder N#9 oder N#10 von einem anderen UE gesendet, dann kommt es nicht zu einer Kollision. Auch bei der Nachricht N#17 kommt es nicht zu einer Kollision mit N#1, da N#1 nur 20 ms (maximale Nachrichtenlänge) lang ist und somit schon beendet ist, wenn N#17 beginnt.

Bei der PRACH-Zugangsprozedur werden zwei Senderahmen (RF) in 15 Zugangszeitschlitze (ZS) unterteilt. Nach UMTS-Spezifikationen kann eine Nachricht 10 ms (N#2 bis N#10) oder 20 ms (N#1) lang sein und wird immer zu Beginn eines Zeitschlitzes gesendet. Es ist möglich, dass die UMTS-Spezifikation dahingehend geändert werden, dass auch längere Nachrichten erlaubt sind (z.B. bis zu 100 ms). Werden für den PRACH Nachrichten erlaubt, die länger als 20 ms sind, dann kann es bei längeren Nachrichten zu bisher nicht möglichen Kollisionen kommen. Ein Beispiel ist in Figur 6 dargestellt, bei dem die Nachricht N#1 eine Länge von 40ms hat. UE#1 sendet seine Nachricht N#1, die 40 ms lang ist. Ein anderes UE#2 sendet seine Nachricht N#2 zum dargestellten Zeitpunkt (ZS#0) und es kommt zu einer Kollision zwischen den beiden Nachrichten. Die Nachricht N#17 startet genau dann, wenn die ersten 20 ms der Nachricht N#1 beendet sind und die nächsten 20 ms von N#1 beginnen. Nun überschneiden sich auch die ,message scrambling codes' der beiden Nachrichten, und somit kann die NodeB die beiden Nachrichten ab diesem Zeitpunkt nicht mehr differenzieren und detektieren.

In Dokument WO 00/57663 A1 ist in diesem Zusammenhang eine Lehre offenbart, wie Reservierungen bei Vielfachzugriff in einem drahtlosen Kommunikationssystem bewirkt werden können.

In Dokument US 2003/026324 A1 ist weiterhin eine Lehre offenbart, wie bei einem Vielfachzugriff in einem paketorientierten, drahtlosen Code-Divison-Multiple-Access (CDMA) System mit einem Steuerkommando die Richtung und der Umfang der Änderung der Übertragungsleistung eines zufälligen Zugriffssignals geregelt werden können.

Der Erfindung liegt vor diesem Hintergrund die Aufgabe zugrunde, eine technische Lehre anzugeben, die es ermöglicht zumindest einen der oben genannten Nachteile zu vermeiden.

Diese Aufgabe wird durch die Merkmale der unabhängigen Ansprüche gelöst. Vorteilhafte und zweckmäßige Weiterbildungen ergeben sich aus den abhängigen Ansprüchen.

Die Erfindung basiert demnach auf dem Gedanken Steuernachrichten zur Beeinflussung des Aussendens von Nachrichten zu versenden, wobei diese auf Zugriffs-Codesequenzen basieren, die zu anderen Zwecken ohnehin schon in einer Zelle bekannt sind.

Dadurch wird eine geeignetere Einstellung der Sendeleistung der Nachrichten ermöglicht und/oder eine Kollision von Nachrichten verschiedener UEs vermieden.

Insbesondere wenn die Quittungs-Codesequenz länger, vorteilhafterweise doppelt so lange, als die Zugriffs-Codesequenz ist, dann stehen nicht nur genau so viele orthogonale Quittungs-Codesequenzen wie orthogonale Zugriffs-Codesequenzen zur Verfügung, sondern es stehen mehr, vorteilhafterweise doppelt so viele, orthogonale Quittungs-Codesequenzen als orthogonale Zugriffs-Codesequenzen zur Verfügung. Diese überschüssigen zueinander orthogonalen Quittungs-Codesequenzen werden dann gemäß einer Ausgestaltung der Erfindung als Regelungs-Codesequenzen zur Generierung von Steuernachrichten genützt, die aufgrund der Orthogonalität der entsprechenden Regelungs-Codesequenzen empfangsseitig separierbar sind.

Die Erfindung wird im Folgenden anhand bevorzugter Ausführungsbeispiele näher beschrieben, zu deren Erläuterung nachstehend aufgelistete Figuren dienen:
Figur 6 Darstellung des zeitlichen Ablaufs einer Zugriffsprozedur mit Kollision;
Figur 7 Abbildung einer Zugriffs-Codesequenz auf eine Regelungs-Codesequenz;
Figur 8 Diagramm einer Steuerung der Sendeleistung einer Nachricht;
Figur 9 Diagramm einer Steuerung der Sendeleistung einer Nachricht;
Figur 10 Darstellung des zeitlichen Ablaufs einer Zugriffsprozedur mit Warteschleife;
Figur 11 tabellarische Darstellung von 16 Regelungs-Codesequenzen;
Figur 12 Darstellung des zeitlichen Ablaufs einer Zugriffsprozedur mit Warteschleife;
Figur 13 Darstellung des zeitlichen Ablaufs einer Zugriffsprozedur mit Warteschleife;
Figur 14 Darstellung des zeitlichen Ablaufs einer Zugriffsprozedur mit Warteschleife;
Figur 15 Darstellung des zeitlichen Ablaufs einer Zugriffsprozedur mit Warteschleife;
Figur 16 Prinzipschaltbild einer Mobilstation bzw. einer Basisstation.

Wie anhand Figur 4 zu sehen, hat eine Antwortsignatur *ASᵢ*, die aus einer Signatur *Sᵢ* der Länge 16 generiert wird, die Länge 32. Nach Stand der Technik werden bis zu 16 verschiedene zueinander orthogonale Antwortsignaturen der Länge 32 genützt, um die zugehörigen Quittungsindikatoren *AI* im DL zu versenden.

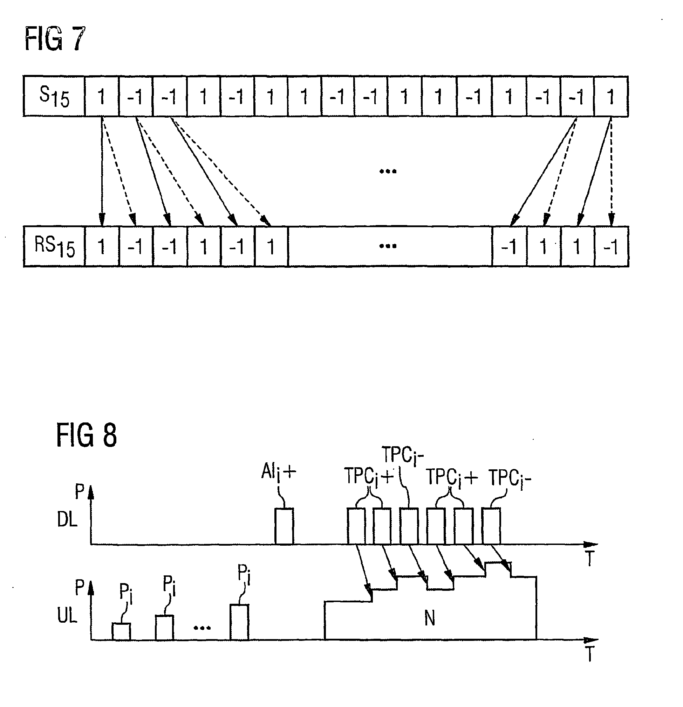

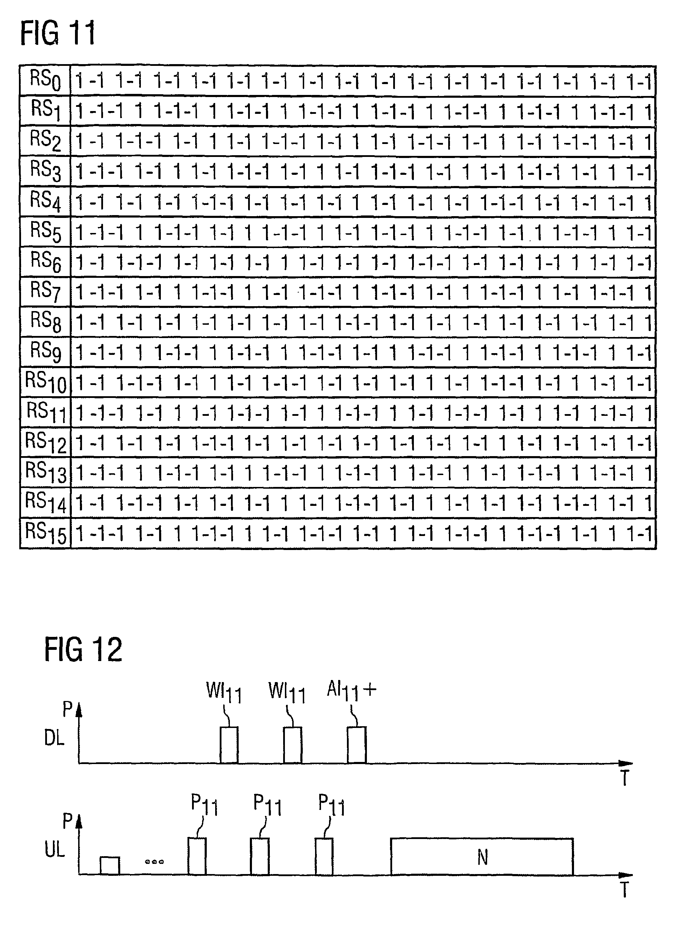

Es wird nun die Erkenntnis genützt, dass aus jeder Signatur Sᵢ(Zugriffs-Codesequenz) neben einer Antwortsignatur ASᵢ (Quittungs-Codesequenz) noch eine zusätzliche Signatur (im folgenden Regelungssignatur (Regelungs-Codesequenz) *RSᵢ* genannt) generiert werden kann, die zu allen anderen Antwort-und Regelungssignaturen orthogonal ist. Somit erhält man aus 16 zueinander orthogonalen Signaturen der Länge 16 neben 16 orthogonalen Antwortsignaturen der Länge 32 noch 16 zusätzliche orthogonale Regelungssignaturen der Länge 32. Wie eine Regelungssignatur (Regelungs-Codesequenz) der Länge 32 aus einer Signatur (Zugriffs-Codesequenz) der Länge 16 generiert wird, ist beispielhaft in Figur 7 skizziert. Die Regelungssignaturen basieren demnach ebenfalls auf den Signaturen und sind in Figur 11 dargestellt.

Diese zusätzlichen 16 Regelungssignaturen werden nun gemäß einer Ausführungsvariante der Erfindung zur Übermittlung von TPC-Befehlen *TPC* (+1 oder -1) im DL für eine Leistungsregelung mit geschlossener Regelschleife für den Nachrichtenteil des PRACHs im UL genutzt. Dazu generiert die Node B zunächst aus der von der UE genutzten Signatur *Sᵢ* die zugehörige Regelungssignatur *RSᵢ*, so wie es in Figur 7 gezeigt ist. Diese Regelungssignatur *RSᵢ* wird noch mit dem TPC-Befehl *TPCᵢ* multipliziert, so dass die Node B insgesamt die Regelungssequenz *TPCᵢ*RSᵢ* versendet. Das Senden einer solchen Regelungssequenz kann von der Node B auch gleichzeitig zu allen anderen Antwort- und Regelungssequenzen erfolgen, da ja alle orthogonal zueinander sind. Somit kann ein UE die für ihn bestimmte Regelungssequenz detektieren.

Im Folgenden ist anhand Figur 8 der zeitliche Ablauf einer derartigen Steuerung der Sendeleistung von über den PRACH gesendeten Nachrichten beispielhaft erläutert. Es ist insbesondere eine gelungene Zugriffsprozedur mit einer Leistungsregelung für den Nachrichtenteil des PRACHs gezeigt.

Ein UE möchte über den PRACH eine Nachricht zur Node B senden. Sie startet daraufhin eine Zugriffsprozedur und detektiert nach mehrmaligem Senden der Preamble Pᵢ einen zugehörigen positiven *AIᵢ* (AIᵢ+) auf dem AICH. Daraufhin startet das UE mit dem Senden des Nachrichtenteils auf der physikalischen Ressource, die eindeutig durch die zur Preamble Pᵢ gehörigen Signatur *Sᵢ* festgelegt ist.

Nachdem die Node B einen ersten Teil (z.B. den ersten Zeitschlitz) der Nachricht empfangen hat und daher die Empfangsqualität messen kann, generiert sie daraufhin einen entsprechenden TPC-Befehl *TPCᵢ* (d.h. *TPCᵢ* = +1 wenn die Empfangsqualität, insbesondere ein gemessenes SIR, schlechter als ein vorgegebener Wert SIR_{target} ist, und *TPCᵢ* = -1 wenn die Empfangsqualität, insbesondere ein gemessenes SIR, besser als ein vorgegebener Wert SIR_{target} ist).

Diesen TPC-Befehl verknüpft die NodeB mit der zugehörigen Regelungssignatur *RSᵢ*, die auf der entsprechenden Signatur Sᵢ (Zugriffs-Codesequenz) basiert (siehe oben), durch Multiplizieren und sendet das Resultat als Steuernachricht im nächsten Zugangszeitschlitz auf dem AICH im DL. Wenn das UE die Regelungssignatur *RSᵢ* inklusive des *TPCᵢ* detektieren kann, passt es die Sendeleistung entsprechend dem Wert von *TPCᵢ* (+1 oder -1) für die Nachricht N an. Wenn das UE die Regelungssignatur *RSᵢ* inklusive des *TPCᵢ* hingegen nicht detektieren kann, so soll keine Änderung an der Sendeleistung vorgenommen werden.

Diese Vorgehensweise (Messung der Empfangsqualität und Senden des TPC-Befehls durch die Node B, Detektion des TPC-Befehls und entsprechende Anpassung der Sendeleistung durch das UE) wird so lange wiederholt, bis das Ende des Sendens der Nachricht auf dem PRACH erreicht ist.

Nach dem Start des Sendens der Nachricht (N) durch das UE im UL sendet also die Node B mit Hilfe der Regelungssignatur auf dem AICH im DL TPC-Befehle. Das UE reagiert daraufhin (durch die Pfeile angedeutet) mit einer entsprechenden Anpassung der Sendeleistung.

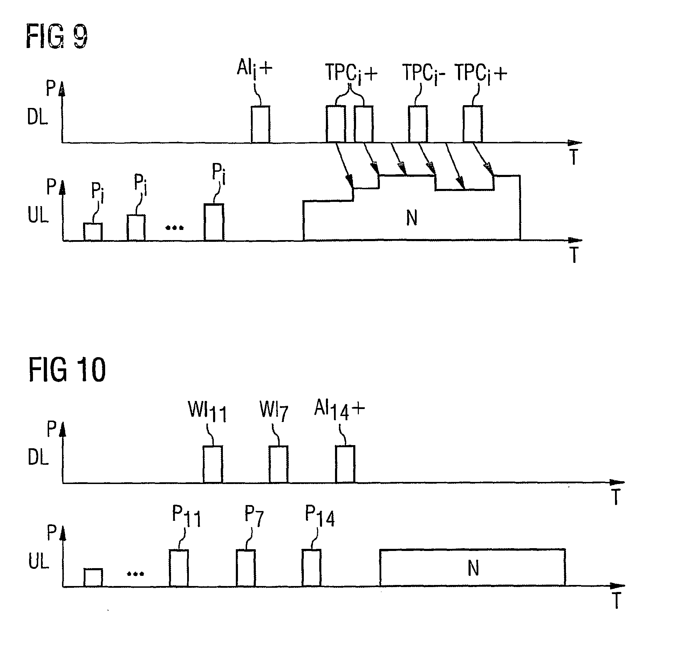

Im folgenden Beispiel, das anhand Figur 9 erläutert wird, soll es nicht nur einen Vergleichswert SIR_{target} für die Empfangsqualität für die Daten eines UEs geben, sondern zwei: oberer Vergleichswert O-SIR_{target} und unterer Vergleichswert U-SIR_{target}.

Wenn nun die gemessene Empfangsqualität im Empfänger (also in der NodeB) oberhalb des O-SIR_{target} liegt, dann soll von der NodeB auf dem AICH mit Hilfe der Regelungssignatur der TPC-Befehl *TPCᵢ* = -1 gesendet werden. Das UE sollte daraufhin entsprechend seine Sendeleistung verringern. Wenn hingegen die gemessene Empfangsqualität im Empfänger (also in der NodeB) unterhalb des U-SIR_{target} liegt, dann soll von der NodeB auf dem AICH mit Hilfe der Regelungssignatur der TPC-Befehl *TPCᵢ* = +1 gesendet werden. Das UE sollte daraufhin entsprechend seine Sendeleistung erhöhen. Wenn allerdings die gemessene Empfangsqualität im Empfänger (also in der NodeB) weder oberhalb des O-SIR_{target} noch unterhalb des U-SIR_{target} liegt, dann soll die NodeB für dieses eine UE nichts auf dem AICH senden.

Wenn das UE die Regelungssignatur *RSᵢ* inklusive des *TPCᵢ* nicht detektieren kann (z.B. weil die Node B auf Grund der gemessenen Empfangsqualität diesen gar nicht versendet), so soll keine Änderung an der Sendeleistung vorgenommen werden.

Die zusätzlichen 16 Regelungssignaturen werden nun in weiteren Ausführungsvarianten der Erfindung zur Vermeidung von Kollisionen für den Fall genutzt, dass ein erstes UE auf einer bestimmten Ressource eines PRACH eine Nachricht mit einer Dauer von länger als 20 ms sendet, und ein zweites UE die gleiche Ressource zeitlich so anfordert, dass der Start der Nachricht des zweiten UE genau 20 ms oder 40 ms oder 60 ms usw. (also k*20 ms mit k=1,2,3,...) nach dem Start der Nachricht des ersten UE liegt. In diesem Falle sendet die NodeB anstatt eines AI einen neu eingeführten Indikator, im Weiteren "Warte Indikator" (WI) genannt, der ebenfalls basierend auf der zur angeforderten Ressource gehörenden Regelungssignatur realisiert wird.

Gemäß einer Ausgestaltung soll das UE nach dem Empfang eines solchen WI im nächstmöglichen Zugangszeitschlitz erneut eine Preamble zu einer zufällig ausgewählten Signatur im UL senden. Empfängt das UE darauf wiederum einen zugehörigen WI, wählt es wiederum eine Preamble zu einer zufällig ausgewählten Signatur und sendet diese im nächstmöglichen Zugangszeitschlitz im UL, usw. Das UE wird so in einer Warteschleife gehalten bis es einen entsprechenden positiven AI auf dem AICH detektiert und mit dem Senden der eigentliche Nachricht beginnen kann. Dies hat den Vorteil, dass die gesamte Anfrageprozedur nicht sofort abgebrochen und von vorne begonnen werden muss, wenn es zu einer Kollision kommen würde, sondern ein oder wenige Zugangszeitschlitze später ein kollisionsfreies Senden der Nachricht realisiert wird. Das wiederholte Senden einer Preamble nach einem WI soll dabei nicht mit steigender sondern mit gleicher Sendeleistung erfolgen, da die Antwort der NodeB mit dem WI ja gezeigt hat, dass die NodeB die Anfrage des UEs verstanden hat und somit die Sendeleistung des UE ausreichend war. Diese Ausgestaltung wird in Figur 10 skizziert.

Vorzugsweise bricht das UE nach einer maximalen Anzahl von empfangenen WIs in der "Warteschleife" die Anfrageprozedur ab und beginnt zu einem späteren Zeitpunkt von vorne.

Eine Ausgestaltung der Erfindung, bei der ein UE, das in der Warteschleife ist, immer wieder die gleiche Signatur wählt, ist in Figur 12 dargestellt.

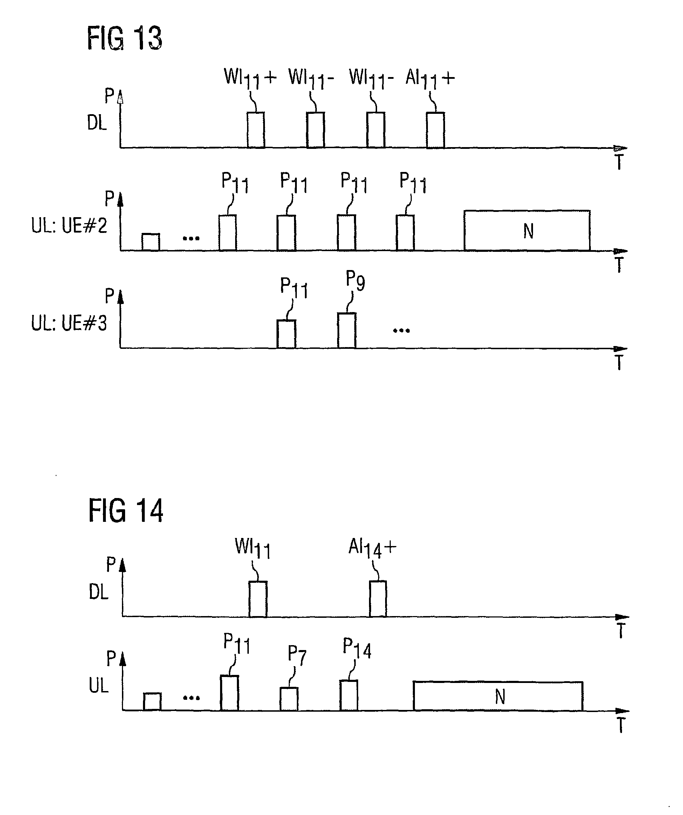

In einer Ausgestaltung gemäß Figur 13 soll die physikalische Ressource zur Signatur S₁₁ bereits von einem ersten UE#1 genutzt werden und kein weiteres UE in der der Signatur S₁₁ zugeordneten Warteschleife sein. Nachdem die UE#2 nun die Preamble P₁₁ gesendet hat, sendet die NodeB einen positiven WI (WI: weil es in die Warteschleife gehen soll, da UE#1 die Ressource gerade nutzt; pos.: weil noch kein anderes UE in der Warteschleife zu P₁₁ ist). Die UE#2 sendet nun erneut die gleiche Preamble mit der gleichen Sendeleistung und erhält daraufhin einen entsprechenden negativen WI. Das UE#2 sendet wiederum die gleiche Preamble mit der gleichen Sendeleistung und erhält wiederum einen negativen WI usw.. Sobald das UE#2 einen entsprechenden positiven AI erhält, fängt es zum vorgesehenen Zeitpunkt an, seine Nachricht auf der zugehörigen physikalischen Ressource zu senden.

Das UE#2 bekommt also als erste Reaktion von der NodeB einen positiven WI, weil der NodeB bekannt ist, dass noch kein anderes UE in der Warteschleife zur Preamble P₁₁ ist. Das UE#2 wird daher in die Warteschleife versetzt. Dass die folgenden WI negativ sind, hat für das UE#2 keine weitere Bedeutung, jedoch für andere UEs. Wenn nämlich während der Warteschleife von dem UE#2 ein drittes UE#3 eine Preamble zur gleichen Signatur S₁₁ sendet und das (zu UE#2 gehörige) neg. WI empfängt, dann ist ihm bekannt, dass dort schon ein anderes UE (nämlich UE#2) in der Warteschleife ist. Daher würde das UE#3 als Reaktion auf den neg. WI als nächstes wieder eine Preamble zu einer zufällig ausgewählten Signatur, hier z.B. S₉, senden.

In den noch folgenden Beispielen wird davon ausgegangen, dass das UE in der Warteschleife ist. In der Warteschleife soll das UE die Preambles jedoch nicht mit der gleichen Sendeleistung senden, sondern diese Sendeleistung nach unterschiedlichen Verfahren anpassen. Die Sendeleistung der Preambles, die während der "Warteschleife" gesendet werden, wird dadurch auf den momentan notwendigen Wert begrenzt, wodurch im Falle eines besser werdenden Mobilfunkkanals unnötige Interferenz im UL vermieden wird. Andererseits wird dadurch erreicht, dass die Preambles auch bei einem schlechter werdenden Mobilfunkkanal noch von der NodeB detektiert werden können. Die Sendeleistungsregelung für die Preambles in einer "Warteschleife" ist gerade auch deswegen sehr wichtig, weil die Sendeleistung der gesendeten Nachricht von der Sendeleistung der zuletzt gesendeten Preamble abgeleitet wird.

Durch das Senden eines entsprechenden Indikators wird gemäß einer Ausführungsvariante gezielt ein UE in eine Warteschleife gesetzt bzw. gehalten und die Sendeleistung der Preamble gesteuert.

Wenn die NodeB einen der Indikatoren sendet, kann davon ausgegangen werden, dass die zuvor von einer UE gesendete Preamble von ihr detektiert werden konnte. Die Sendeleistung der zuvor gesendeten Preamble war also ausreichend. Daher soll das UE bei der nächsten Preamble die Sendeleistung um einen festen Wert (z.B. 1 dB) verringern.

Falls hingegen weder ein Warteschleife-Indikator (neg. AI, WI oder pos. bzw. neg. WI, s.o.) noch ein pos. AI von der NodeB als Antwort auf eine Preamble gesendet (bzw. von dem UE detektiert) wurde, bedeutet dies, dass die zuvor gesendete Preamble nicht von der NodeB detektiert werden konnte. Die Sendeleistung der zuvor gesendeten Preamble war also nicht ausreichend. Daher soll das UE bei der nächsten Preamble die Sendeleistung um einen festen Wert (z.B. 2 dB) erhöhen.

Die Werte der Verringerung bzw. Erhöhung (hier 1 dB bzw. 2 dB) der Sendeleistung könnten von der Netzwerkseite bekannt gegeben werden, z.B. auf dem gleichen Wege, wie auch die anderen Parameter (z.B. verfügbare Signaturen, s.o.) bekannt gegeben werden.

### Zusammengefasst ergibt das folgende Regeln für das UE:

Wenn ein entsprechender Indikator detektiert wurde: Sendeleistung verringern. Wenn ein entsprechender Indikator nicht detektiert wurde: Sendeleistung erhöhen.

Eine Skizze hierzu ist in Figur 14 gezeigt. Da auf S₁₁ eine Antwort WI₁₁ folgt, wird die Sendeleistung der folgenden Preamble verringert. Auf die folgende Preamble S₇ kommt keine Antwort (weder WI noch AI+), daher wird die Sendeleistung zur folgenden Preamble wieder erhöht.

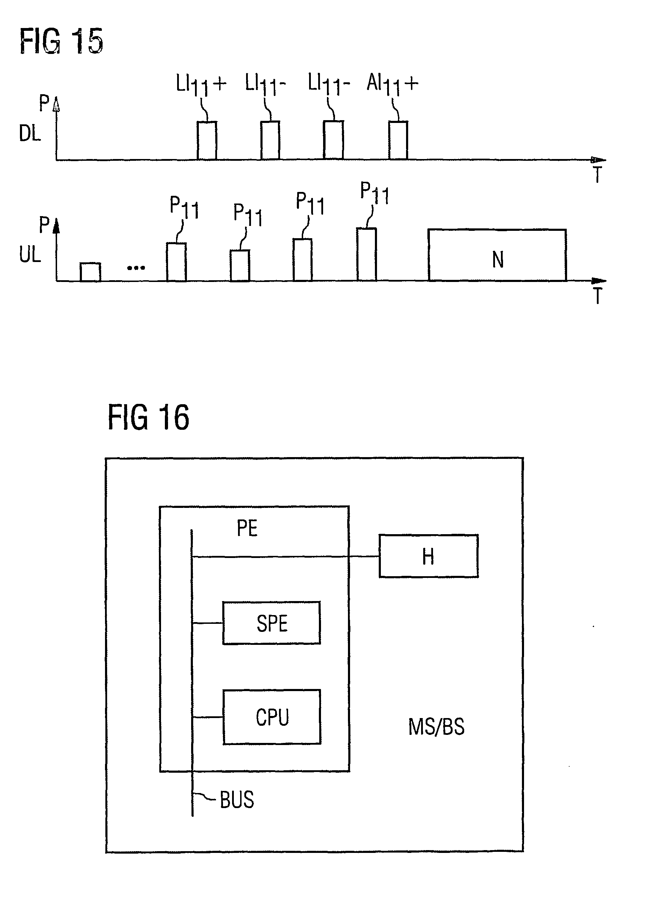

Eine andere Ausführungsvariante sieht vor, dass die Node B direkt signalisiert, ob das UE, das sich in einer Warteschleife befindet, die Sendeleistung für die Pramble verringern oder erhöhen soll. Eine Skizze hierzu ist in Figur 15 dargestellt.

Auch hierfür können die zusätzlichen 16 Regelungssignaturen genutzt werden. Ein UE sendet die Preamble zu S₁₁, die von der NodeB besser als nötig detektiert werden konnte. Daher sendet die NodeB einen negativen Leistungs-Indikator (LI), woraufhin das UE die Sendeleistung für das nächste Senden der Preamble verringert. Beim nächsten Senden detektiert die NodeB die Preamble nicht mehr oder nur noch schwach, daher sendet die NodeB einen negativen Leistungs-Indikator (LI), woraufhin das UE die Sendeleistung für das nächste Senden erhöht usw.. Wenn ein pos. AI von der NodeB gesendet wird, dann wird parallel kein pos. oder neg. LI mehr gesendet.

Eine andere Ausführungsvariante der Erfindung sieht vor, dass parallel zur Zugangsprozedur ein DPCCH im UL und DL gesendet wird, mit Hilfe dessen die entsprechenden Informationen zur Sendeleistungsregelung für die Preambles gesendet werden.
Nach UMTS-Standard (siehe [2]) werden die Informationen zur Sendeleistungsregelung für bestimmte physikalische Kanäle (z.B. DPDCH) ebenfalls über DPCCH im UL und DL gesendet.

Figur 16 zeigt eine Mobilstation MS bzw. eine Basisstation BS, welche eine Hochfrequenzeinrichtung HF und eine Prozessoreinrichtung PE enthält.

Zur Steuerung der Mobilstation MS und der Verfahren, welche durch die Mobilstation ausgeführt werden, ist eine programmgesteuerte Prozessoreinrichtung PE, wie beispielsweise ein Mikrocontroller vorgesehen, der auch einen Prozessor CPU und eine Speichereinrichtung SPE umfassen kann. Die unterschiedlichen Komponenten können über ein Bussystem BUS oder Ein-/Ausgabeschnittstellen und gegebenenfalls geeignete Controller mit dem Prozessor CPU Daten austauschen.

In der Speichereinrichtung SPE sind die Programmdaten, wie beispielsweise die Steuerbefehle oder Steuerprozeduren, die zur Steuerung der Mobilstation herangezogen werden, gespeichert.

Die prinzipielle Funktion dieser Komponenten im Zusammenhang mit einer Mobilstation und deren programmtechnische Einrichtung zur Durchführung der erfindungsgemäßen Verfahren als solche ist einem Fachmann hinreichend bekannt, weshalb an dieser Stelle nicht näher darauf eingegangen wird.
[1] TS 25.214 V5.4.0: Physical layer procedures (FDD), 3GPP-TSG-RAN, 03-2003
[2] TS 25.211 V5.3.0: Physical channels and mapping of transport channels onto physical channels (FDD), 3GPP-TSG-RAN, 12-2002

## Patentansprüche

1. Verfahren zur Übertragung einer Nachricht von einer Mobilstation an eine Basisstation, bei dem von der Mobilstation eine Zugriffsanfrage, die auf einer Zugriffs-Codesequenz basiert, wiederholt mit steigender Sendeleistung ausgesendet wird, bei dem von der Basisstation als Reaktion auf den Empfang der Zugriffsanfrage ein Quittungsindikator, der mit einer Quittungs-Codesequenz multipliziert wird, ausgesendet wird, bei dem die Quittungs-Codesequenz auf der Zugriffs-Codesequenz basiert, bei dem durch einen positiven Quittungsindikator signalisiert wird, dass für die Mobilstation eine Nachrichtenübertragungsressource bereitsteht, bei dem durch einen negativen Quittungsindikator signalisiert wird, dass für die Mobilstation keine Nachrichtenübertragungsressource bereitsteht, bei dem von der Mobilstation als Reaktion auf den Empfang eines positiven Quittungsindikators die Nachricht über die bereitstehende Nachrichtenübertragungsressource ausgesendet wird,
**gekennzeichnet dadurch, dass**
- zumindest eine Steuernachricht, die auf einer Regelungs-Codesequenz basiert, von der Basisstation ausgesendet wird,
- die Regelungs-Codesequenz auf der Zugriffs-Codesequenz basiert,
- durch die zumindest eine Steuernachricht das Aussenden der Zugriffsanfrage und/oder der Nachricht beeinflusst wird,
- die Zugriffs-Codesequenz die Länge n aufweist und einem Satz von n zueinander orthogonalen Codes entnommen wird,
- die Quittungs-Codesequenz die Länge m aufweist,
- die Regelungs-Codesequenz die Länge m aufweist,
- gilt: m = 2n, und
- die Quittungs-Codesequenzen und Regelungs-Codesequenz zueinander orthogonal sind.

2. Verfahren nach Anspruch 1, bei dem durch die zumindest eine Steuernachricht die Sendeleistung der Nachricht gesteuert wird.

3. Verfahren nach einem der vorhergehenden Ansprüche, bei dem durch die zumindest eine Steuernachricht der Zeitpunkt des Aussendens der Nachricht beeinflusst, insbesondere verzögert, wird.

4. Verfahren nach einem der vorhergehenden Ansprüche, bei dem durch die zumindest eine Steuernachricht die Sendeleistung der Zugriffsanfrage gesteuert wird.

5. Verfahren nach einem der vorhergehenden Ansprüche, bei dem zwischen einer positiven und einer negativen Steuernachricht unterschieden wird, bei dem bei positiver Steuernachricht die Zugriffsanfrage immer auf der gleichen Zugriffs-Codesequenz basiert und bei negativer Steuernachricht die Zugriffsanfrage auf einer neuen, zufällig aus einer vorgegebenen Menge ausgewählten Zugriffs-Codesequenz basiert.

6. Basisstation mit einer Prozessoreinrichtung die derart eingerichtet ist, dass eine von einer Mobilstation gesendete Zugriffsanfrage, die auf einer Zugriffs-Codesequenz basiert, empfangen wird, dass von der Basisstation als Reaktion auf den Empfang der Zugriffsanfrage ein Quittungsindikator, der mit einer Quittungs-Codesequenz multipliziert wird, ausgesendet wird, wobei die Quittungs-Codesequenz auf der Zugriffs-Codesequenz basiert, wobei durch einen positiven Quittungsindikator signalisiert wird, dass für die Mobilstation eine Nachrichtenübertragungsressource bereitsteht, und durch einen negativen Quittungsindikator signalisiert wird, dass für die Mobilstation keine Nachrichtenübertragungsressource bereitsteht,
**gekennzeichnet dadurch, dass**
- zumindest eine Steuernachricht, die auf der ZugriffsCodesequenz basiert, von der Basisstation ausgesendet wird, durch welche das Aussenden einer Nachricht durch die Mobilstation über die bereitstehende Nachrichtenübertragungsressource als Reaktion auf den Empfang eines positiven Quittungsindikators beeinflusst wird,
- die Zugriffs-Codesequenz die Länge n aufweist und einem Satz von n zueinander orthogonalen Codes entnommen wird,
- die Quittungs-Codesequenz die Länge m aufweist,
- die Regelungs-Codesequenz die Länge m aufweist,
- gilt: m = 2n, und
- die Quittungs-Codesequenzen und Regelungs-Codesequenz zueinander orthogonal sind.

7. Mobilstation mit einer Prozessoreinrichtung, die derart eingerichtet ist, dass von der Mobilstation eine Zugriffsanfrage, die auf einer Zugriffs-Codesequenz der Länge basiert, wiederholt mit steigender Sendeleistung ausgesendet wird, dass von der Mobilstation als Reaktion auf den Empfang eines positiven Quittungsindikators von der Basisstation eine Nachricht über eine bereitstehende Nachrichtenübertragungsressource ausgesendet wird,
**gekennzeichnet dadurch, dass**
- durch zumindest eine Steuernachricht, die auf der Zugriffs-Codesequenz basiert, und die von der Basisstation ausgesendet wird, das Aussenden der Nachricht beeinflusst wird,
- die Zugriffs-Codesequenz die Länge n aufweist und einem Satz von n zueinander orthogonalen Codes entnommen wird,
- die Quittungs-Codesequenz die Länge m aufweist,
- die Regelungs-Codesequenz die Länge m aufweist,
- gilt: m = 2n, und
- die Quittungs-Codesequenzen und Regelungs-Codesequenz zueinander orthogonal sind.

## Claims

1. Method for transmitting a message from a mobile station to a base station,
wherein an access request based on an access code sequence is repeatedly transmitted by the mobile station with increasing transmission power,
wherein in response to the receipt of the access request an acknowledgement indicator which is multiplied by an acknowledgement code sequence is transmitted by the base station,
wherein the acknowledgement code sequence is based on the access code sequence,
wherein a positive acknowledgement indicator signals that a message transmission resource is available for the mobile station,
wherein a negative acknowledgement indicator signals that no message transmission resource is available for the mobile station,
wherein in response to the receipt of a positive acknowledgement indicator the message is transmitted via the available message transmission resource by the mobile station,
**characterised in that**
- at least one control message based on a control code sequence is transmitted by the base station,
- the control code sequence is based on the access code sequence,
- the transmission of the access request and/or of the message is influenced by the at least one control message,
- the access code sequence has the length n and is taken from a set of n codes standing in orthogonal relationship to one another,
- the acknowledgement code sequence has the length m,
- the control code sequence has the length m,
- m = 2n applies, and
- the acknowledgement code sequences and control code sequence stand in orthogonal relationship to one another.

2. Method according to claim 1,
wherein the transmission power of the message is controlled by the at least one control message.

3. Method according to one of the preceding claims,
wherein the time point of the transmission of the message is influenced, in particular delayed, by the at least one control message.

4. Method according to one of the preceding claims,
wherein the transmission power of the access request is controlled by the at least one control message.

5. Method according to one of the preceding claims,
wherein a distinction is made between a positive and a negative control message,
wherein in the case of a positive control message the access request is always based on the same access code sequence and in the case of a negative control message the access request is based on a new access code sequence selected randomly from a predefined set.

6. Base station having a processor device which is set up such that an access request sent by a mobile station and based on an access code sequence is received, that in response to the receipt of the access request an acknowledgement indicator which is multiplied by an acknowledgement code sequence is transmitted by the base station, wherein the acknowledgement code sequence is based on the access code sequence, wherein a positive acknowledgement indicator signals that a message transmission resource is available for the mobile station, and a negative acknowledgement indicator signals that no message transmission resource is available for the mobile station, **characterised in that**
- at least one control message based on the access code sequence is transmitted by the base station, by which control message the transmission of a message by the mobile station via the available message transmission resource as a response to the receipt of a positive acknowledgement indicator is influenced,
- the access code sequence has the length n and is taken from a set of n codes standing in orthogonal relationship to one another,
- the acknowledgement code sequence has the length m,
- the control code sequence has the length m,
- m = 2n applies, and
- the acknowledgement code sequences and control code sequence stand in orthogonal relationship to one another.

7. Mobile station having a processor device which is set up such that an access request based on an access code sequence of the length is repeatedly transmitted by the mobile station with increasing transmission power, that in response to the receipt of a positive acknowledgement indicator from the base station a message is transmitted via an available message transmission resource by the mobile station,
**characterised in that**
- the transmission of the message is influenced by at least one control message based on the access code sequence and transmitted by the base station,
- the access code sequence has the length n and is taken from a set of n codes standing in orthogonal relationship to one another,
- the acknowledgement code sequence has the length m,
- the control code sequence has the length m,
- m = 2n applies, and
- the acknowledgement code sequences and control code sequence stand in orthogonal relationship to one another.

## Revendications

1. Procédé de transmission d'un message d'une station mobile à une station de base,
dans lequel une demande d'accès basée sur une séquence de code d'accès est émise par la station mobile à plusieurs reprises avec une puissance d'émission croissante,
dans lequel un indicateur d'accusé de réception, qui est multiplié avec une séquence de code d'accusé de réception, est émis par la station de base en tant que réaction à la réception de la demande d'accès,
dans lequel la séquence de code d'accusé de réception est basée sur la séquence de code d'accès,
dans lequel il est signalé par un indicateur d'accusé de réception positif qu'une ressource de transmission de message est disponible pour la station mobile,
dans lequel il est signalé par un indicateur d'accusé de réception négatif qu'aucune ressource de transmission de message n'est disponible pour la station mobile,
dans lequel le message concernant la disponibilité de la ressource de transmission de message est émis par la station mobile en tant que réaction à la réception d'un indicateur d'accusé de réception positif,
**caractérise en ce que**
- au moins un message de commande, qui est basé sur une séquence de code de réglage, est émis par la station de base,
- la séquence de code de réglage est basée sur la séquence de code d'accès,
- l'émission de la demande d'accès et/ou du message est influencée par l'au moins un message de commande,
- la séquence de code d'accès présente la longueur n et est extraite d'un jeu de n codes orthogonaux les uns par rapport aux autres,
- la séquence de code d'accusé de réception présente la longueur m,
- la séquence de code de réglage présente la longueur m,
- on a : m = 2n, et
- les séquences de code d'accusé de réception et la séquence de code de réglage sont orthogonales les unes par rapport aux autres.

2. Procédé selon la revendication 1,
dans lequel la puissance d'émission du message est commandée par l'au moins un message de commande.

3. Procédé selon l'une quelconque des revendications précédentes,
dans lequel le moment de l'émission du message est influencé, notamment retardé, par l'au moins un message de commande.

4. Procédé selon l'une quelconque des revendications précédentes,
dans lequel la puissance d'émission de la demande d'accès est commandée par l'au moins un message de commande.

5. Procédé selon l'une quelconque des revendications précédentes,
dans lequel il est différentié entre un message de commande positif et un message de commande négatif,
dans lequel, lorsque le message de commande est positif, la demande d'accès est toujours basée sur la même séquence de code d'accès, et lorsque le message de commande est négatif, la demande d'accès est basée sur une nouvelle séquence de code d'accès sélectionnée par hasard à partir d'une quantité prédéfinie.

6. Station de base comprenant un dispositif processeur qui est configuré de manière à ce qu'une demande d'accès émise par une station mobile, qui est basée sur une séquence de code d'accès, est reçue, en ce qu'un indicateur d'accusé de réception, qui est multiplié avec une séquence de code d'accusé de réception, est émis par la station de base en tant que réaction à la réception de la demande d'accès, la séquence de code d'accusé de réception étant basée sur la séquence de code d'accès, un indicateur d'accusé de réception positif signalant qu'une ressource de transmission de message est disponible pour la station mobile, et un indicateur d'accusé de réception négatif signalant qu'aucune ressource de transmission de message n'est disponible pour la station mobile, **caractérisée en ce que**
- au moins un message de commande, qui est basé sur la séquence de code d'accès, est émis par la station de base, par lequel message de commande l'émission d'un message par la station mobile par l'intermédiaire de la ressource de transmission de message disponible en tant que réaction à la réception d'un indicateur d'accusé de réception positif est influencée,
- la séquence de code d'accès présente la longueur n et est extraite d'un jeu de n codes orthogonaux les uns par rapport aux autres,
- la séquence de code d'accusé de réception présente la longueur m,
- la séquence de code de réglage présente la longueur m,
- on a : m = 2n, et
- les séquences de code d'accusé de réception et la séquence de code de réglage sont orthogonales les unes par rapport aux autres.

7. Station mobile comprenant un dispositif processeur qui est configuré de manière à ce qu'une demande d'accès, qui est basée sur une séquence de code d'accès de longueur n, soit émise à plusieurs reprises avec une puissance d'émission croissante, à ce qu'un message soit émis par la station mobile par l'intermédiaire d'une ressource de transmission de message disponible en tant que réaction à la réception d'un indicateur d'accusé de réception positif,
**caractérisée en ce que**
- l'émission du message est influencée par l'au moins un message de commande, qui est basé sur la séquence de code d'accès et est émis par la station de base,
- la séquence de code d'accès présente la longueur n et est extraite d'un jeu de n codes orthogonaux les uns par rapport aux autres,
- la séquence de code d'accusé de réception présente la longueur m,
- la séquence de code de réglage présente la longueur m,
- on a : m = 2n, et
- les séquences de code d'accusé de réception et la séquence de code de réglage sont orthogonales les unes par rapport aux autres.
